# EUROPEAN PATENT SPECIFICATION

(11) **EP 3 530 490 B1**
(45) Date of publication and mention of the grant of the patent: **28.04.2021**
(21) Application number: 19159272.4
(22) Date of filing: 26.02.2019
(51) Int. Cl.: B60C 11/16

(54) **METHOD FOR PRODUCING AN ANTI-SKID STUD AND ANTI-SKID STUD**
VERFAHREN ZUR HERSTELLUNG EINES SPIKES UND SOLCH EIN SPIKE SELBST
PROCÉDÉ DE PRODUCTION D'UN CLOU ANTIDÉRAPANT ET CLOU ANTIDÉRAPANT

(30) Priority: 26.02.2018 FI 20185176
(43) Date of publication of application: 28.08.2019
(73) Proprietor: Black Donuts Engineering OY, 33960 Pirkkala (FI)
(72) Inventor: KOSSI, Henri, 37120 Nokia (FI); RAATIKAINEN, Jouni, 37560 Lempäälä (FI)
(74) Representative: Boco IP Oy Ab

(56) References cited:
- GB-A- 1 063 936
- RU-C1- 2 148 498

## Description

### Field of the invention

The invention relates to method for producing an anti-skid stud comprising a supporting part and a stud pin that is partly arranged in a blind hole in the supporting part as defined in the preamble of independent claim 1.

The invention also relates to an anti-skid stud comprising a supporting part and a stud pin that is partly arranged in a blind hole in the supporting part as defined in the preamble of independent claim 13.

Anti-skid studs having a supporting part made of polymer are known in the art.

Publication US 3,837,386 presents an anti-skid stud for tires having a stud body of plastic material.

Publication SE 7205629 presents an anti-skid stud having a supporting part made of plastic.

Publication DE 10 2013 113 043 A1 presents an anti-skid stud having a supporting part made of plastic.

Publication WO 2017/1983532 presents a stud for a pneumatic vehicle tire and a method for producing a stud. This known stud has a stud body made from a plastic which contains reinforcing fibres, and a stud pin made from hard metal which is positioned in the stud body and protrudes out of the stud body. The stud body has a main body part and a base part which protrudes laterally beyond the main body part. The stud pin reaches in the stud body substantially as far as the level of the base part, and has a pin shank with at least one anchoring element which widens the radially inner end region of the pin shank, wherein the reinforcing fibres in the central region of the base part are oriented mainly and substantially perpendicularly with respect to the stud pin. This know stud is produced so that the stud pin is positioned in a casting form so that the stud pin projects out of the casting form and so that a cavity is formed around the stud pin in the casting form. Liquid plastic material containing reinforcing fibers is thereafter injected into the cavity around the stud pin in the casting form to form the stud body made from a plastic which contains reinforcing fibres.

Document GB 1,063,936 and document RU 2 148 498 C1 presents tire studs, wherein RU 2 148 498 C1 is showing the features of the preamble of independent claims 1 and 12.

### Objective of the invention

The object of the invention is to provide a new and innovative method for producing antskid studs and correspondingly to provide an anti-skid stud.

### Short description of the invention

The method is characterized by the definitions of independent claim 1.

Preferred embodiments of the method are defined in the dependent claims 2 to 11.

The anti-skid stud of the invention is correspondingly characterized by the definitions of independent claim 12.

Preferred embodiments of the anti-skid stud are defined in the dependent claims 13 to 20.

### List of figures

In the following the invention will described in more detail by referring to the figures, wherein only figures 33-40 represent the invention. Therefore only embodiments 9 to 11 relate to the invention according to independent claims 1 and 12.
Figure 1 shows in cut-view the supporting part in a first embodiment,
Figure 2 shows the stud pin in a first embodiment,
Figure 3 shows in cut-view pressing of the stud pin shown in figure 1 into blind hole of the supporting part shown in figure 2,
Figure 4 shows in cut-view an anti-skid stud according to a first embodiment,
Figure 5 shows in cut-view the supporting part in a second embodiment,
Figure 6 shows the stud pin in a second embodiment,
Figure 7 shows in cut-view pressing of the stud pin shown in figure 6 into blind hole of the supporting part shown in figure 5,
Figure 8 shows in cut-view an anti-skid stud according to a second embodiment,
Figure 9 shows in cut-view the supporting part in a third embodiment,
Figure 10 shows the stud pin in a third embodiment,
Figure 11 shows in cut-view pressing of the stud pin shown in figure 10 into blind hole of the supporting part shown in figure 9,
Figure 12 shows in cut-view an anti-skid stud according to a third embodiment,
Figure 13 shows in cut-view the supporting part in a fourth embodiment,
Figure 14 shows the stud pin in a fourth embodiment,
Figure 15 shows in cut-view pressing of the stud pin shown in figure 14 into blind hole of the supporting part shown in figure 13,
Figure 16 shows in cut-view an anti-skid stud according to a first embodiment,
Figure 17 shows in cut-view the supporting part in a fifth embodiment,
Figure 18 shows the stud pin in a fifth embodiment,
Figure 19 shows in cut-view pressing of the stud pin shown in figure 18 into blind hole of the supporting part shown in figure 17,
Figure 20 shows in cut-view an anti-skid stud according to a fifth embodiment,
Figure 21 shows in cut-view the supporting part in a sixth embodiment,
Figure 22 shows the stud pin in a sixth embodiment,
Figure 23 shows in cut-view pressing of the stud pin shown in figure 22 into blind hole of the supporting part shown in figure 21,
Figure 24 shows in cut-view an anti-skid stud according to a sixth embodiment,
Figure 25 shows in cut-view the supporting part in a seventh embodiment,
Figure 26 shows the stud pin in a seventh embodiment,
Figure 27 shows in cut-view pressing of the stud pin shown in figure 26 into blind hole of the supporting part shown in figure 25,
Figure 28 shows in cut-view an anti-skid stud according to a seventh embodiment,
Figure 29 shows in cut-view the supporting part in an eight embodiment,
Figure 30 shows the stud pin in an eight embodiment,
Figure 31 shows in cut-view pressing of the stud pin shown in figure 30 into blind hole of the supporting part shown in figure 29,
Figure 32 shows in cut-view an anti-skid stud according to an eight embodiment,
Figure 33 shows in cut-view the supporting part in a ninth embodiment,
Figure 34 shows the stud pin in a ninth embodiment,
Figure 35 shows in cut-view pressing of the stud pin shown in figure 34 into blind hole of the supporting part shown in figure 33,
Figure 36 shows in cut-view an anti-skid stud according to a ninth embodiment,
Figure 37 shows in cut-view the supporting part in a tenth embodiment,
Figure 38 shows the stud pin in a tenth embodiment,
Figure 39 shows in cut-view pressing of the stud pin shown in figure 38 into blind hole of the supporting part shown in figure 37,
Figure 40 shows in cut-view an anti-skid stud according to a tenth embodiment,
Figure 41 shows in cut-view the supporting part in an eleventh embodiment,
Figure 42 shows the stud pin in an eleventh embodiment,
Figure 43 shows in cut-view pressing of the stud pin shown in figure 42 into blind hole of the supporting part shown in figure 41,
Figure 44 shows in cut-view an anti-skid stud according to an eleventh embodiment,
Figure 45 shows in cut-view the supporting part in a twelfth embodiment,
Figure 46 shows the stud pin in a twelfth embodiment,
Figure 47 shows in cut-view pressing of the stud pin shown in figure 46 into blind hole of the supporting part shown in figure 45,
Figure 48 shows in cut-view an anti-skid stud according to a twelfth embodiment,
Figure 49 shows in cut-view the supporting part in a thirteenth embodiment,
Figure 50 shows the stud pin in a thirteenth embodiment,
Figure 51 shows in cut-view pressing of the stud pin shown in figure 50 into blind hole of the supporting part shown in figure 49,
Figure 52 shows in cut-view an anti-skid stud according to a thirteenth eleventh embodiment.

### Detailed description of the invention

First the method for producing an anti-skid stud comprising a supporting part 1 and a stud pin 2 that is partly arranged in a blind hole 3 in the supporting part 1 and some variants and embodiments of the method will be described in greater detail.

The method comprises providing a supporting part 1 that is made of elastic or of elastically deformable material such as of polymer and that has a blind hole 3.

The elastic or elastically deformable material is essentially homogenous and/or is, free of fibers. An advantage of such material is the capably to deform elastically without breaking.

The method comprises providing a stud pin 2 having a proximal end 4 and a distal end 5. The stud pin 2 can be made of or comprise hard material such as metal, and comprises preferably, but not necessarily, hard metal such as tungsten carbide and/or other carbides.

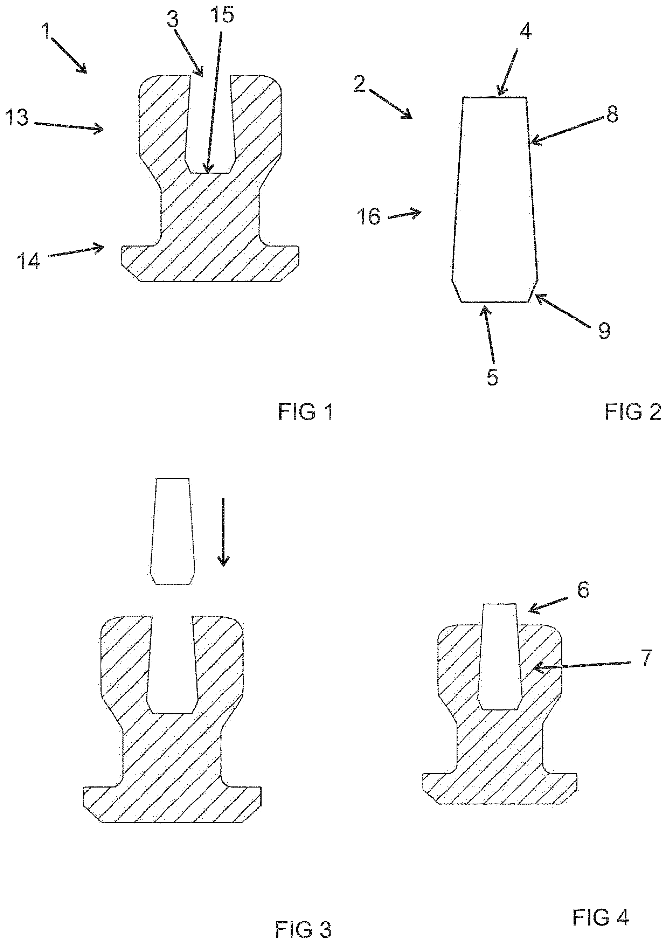

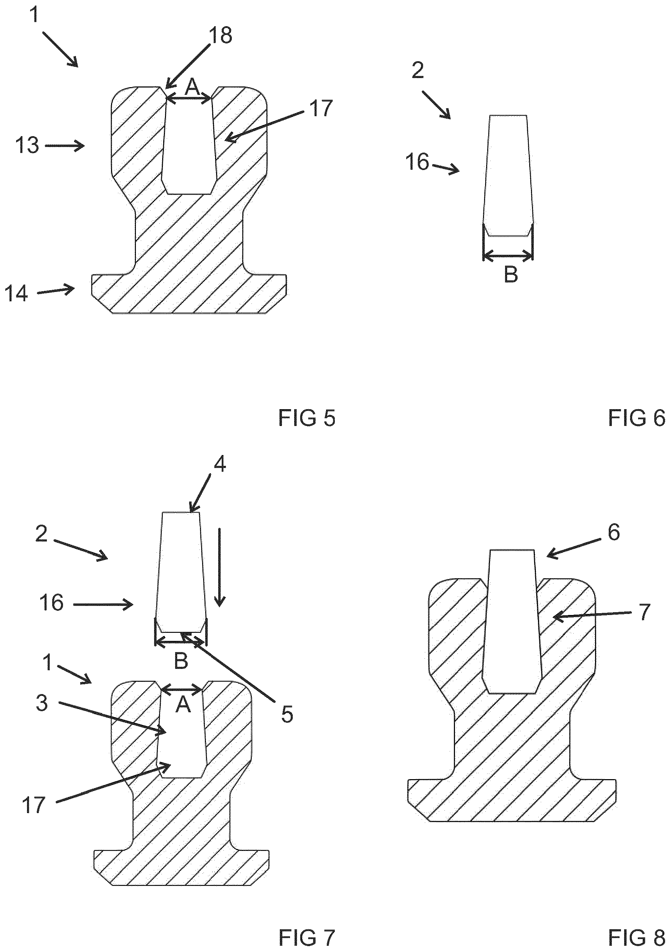

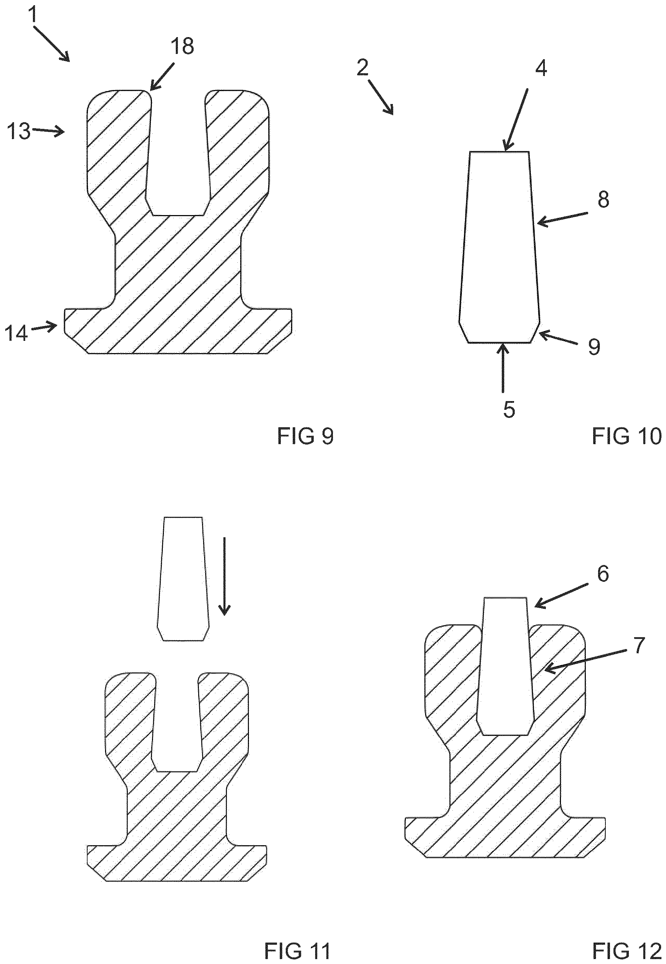

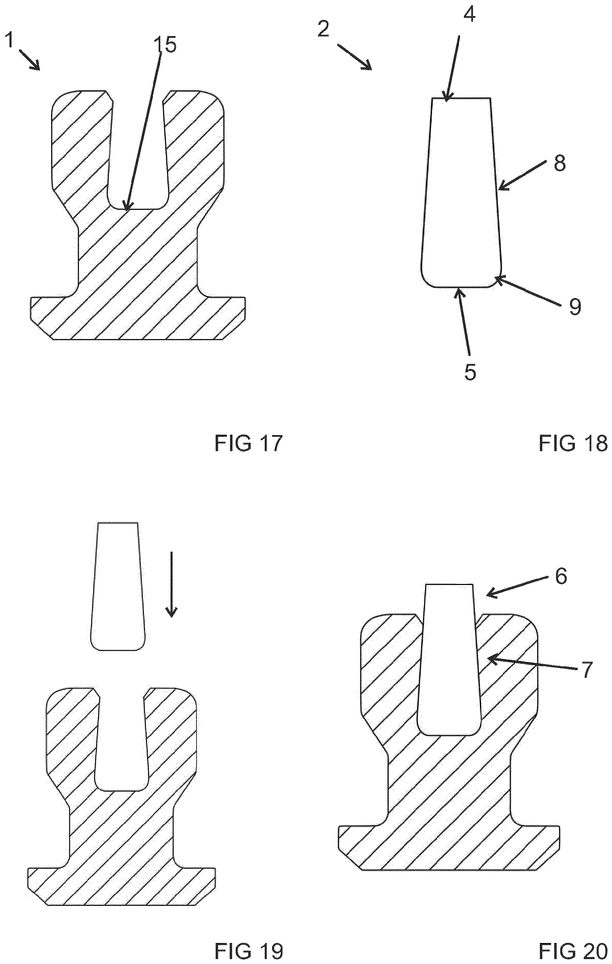

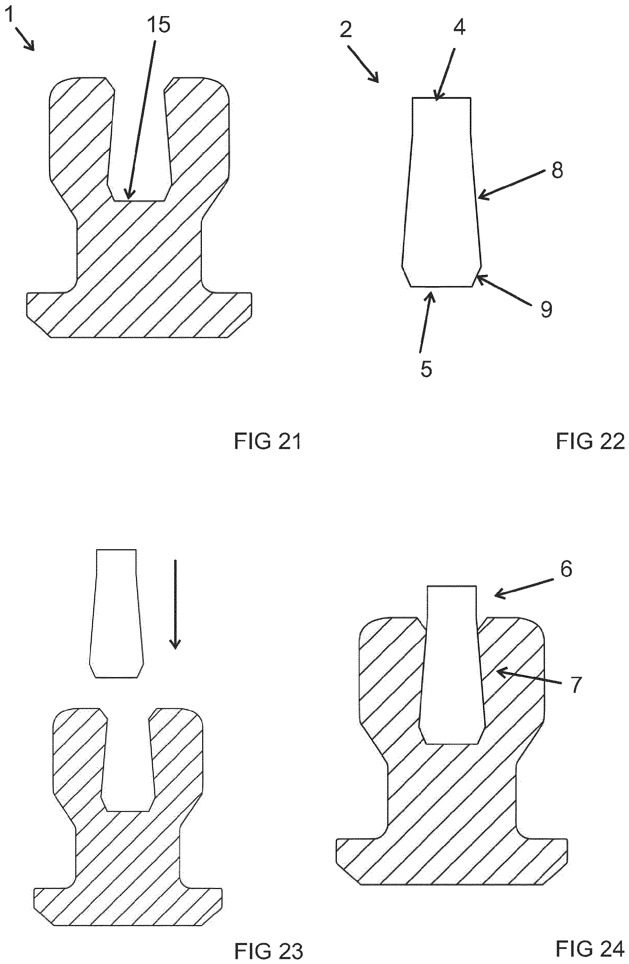

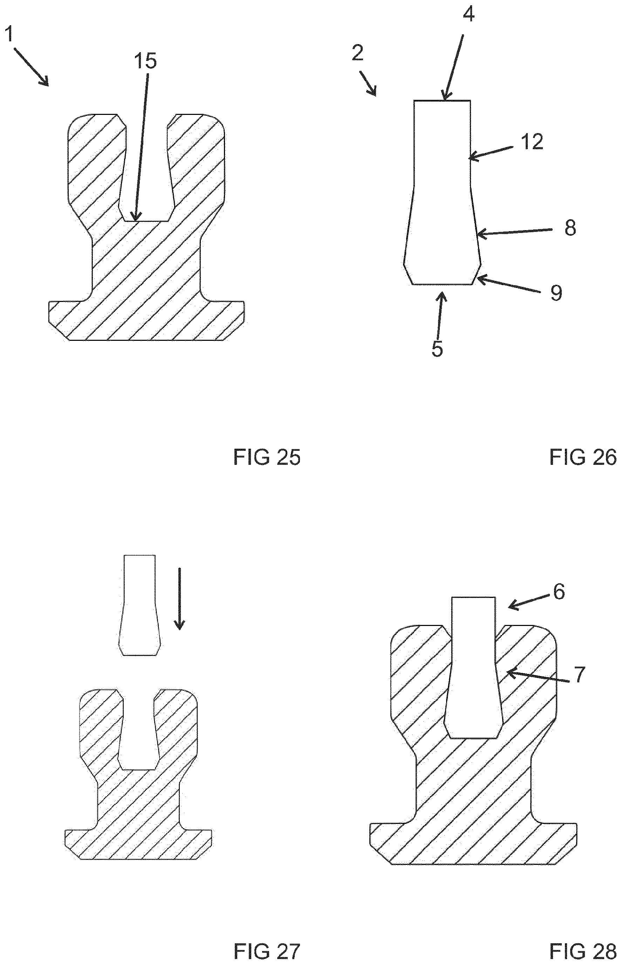

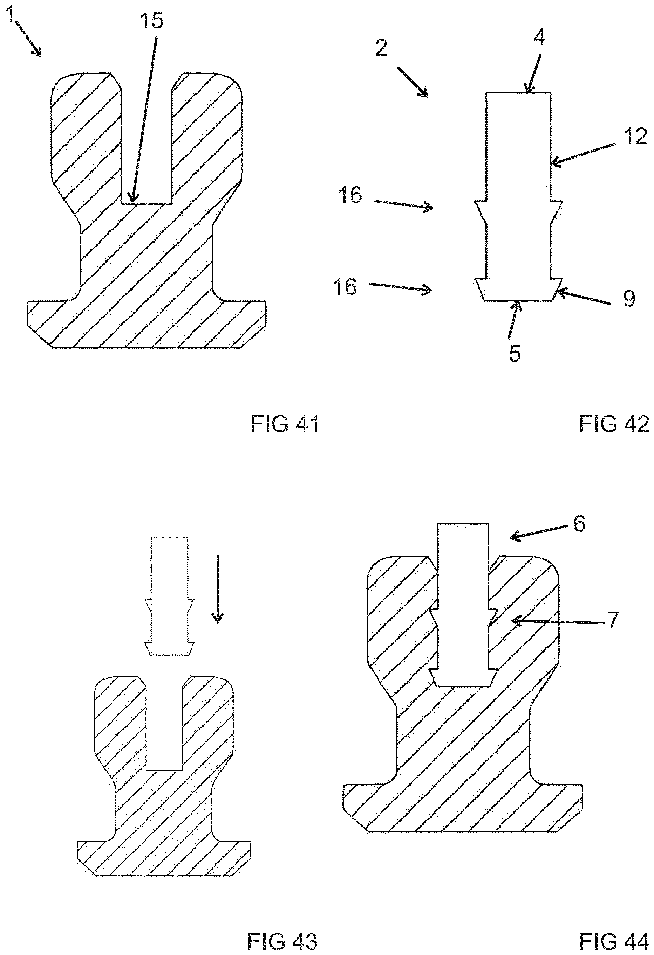

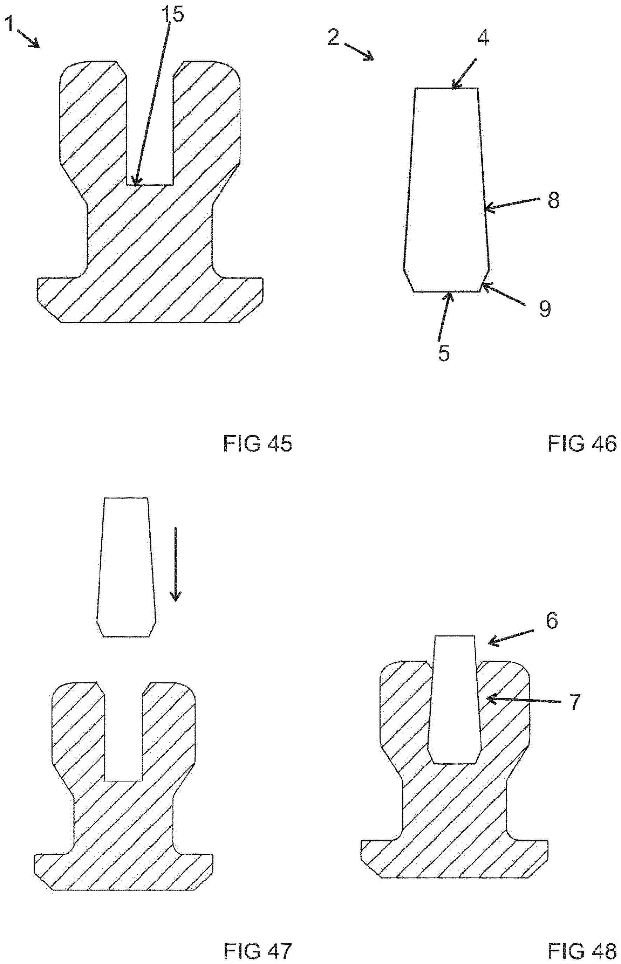

The stud pin 2 that is provided comprises a protruding grip section 6 and an insertion section 7 having at least one first holding section 16. In the embodiments illustrated in figures 1 to 40 and in figures 45 to 52, the insertion section 7 of the stud pin 2 has one first holding section 16 and in the eleventh embodiment illustrated in figures 41 to 44, the insertion section 7 of the stud pin 2 has two first holding sections 16.

The blind hole 3 of the supporting part 1 that is provided has a bottom 15 and a second holding section 17. The second holding section 17 has a smallest cross-section A that is smaller than a largest cross section B of the first holding section 16 of the insertion section 7 of the stud pin 2 that is provided.

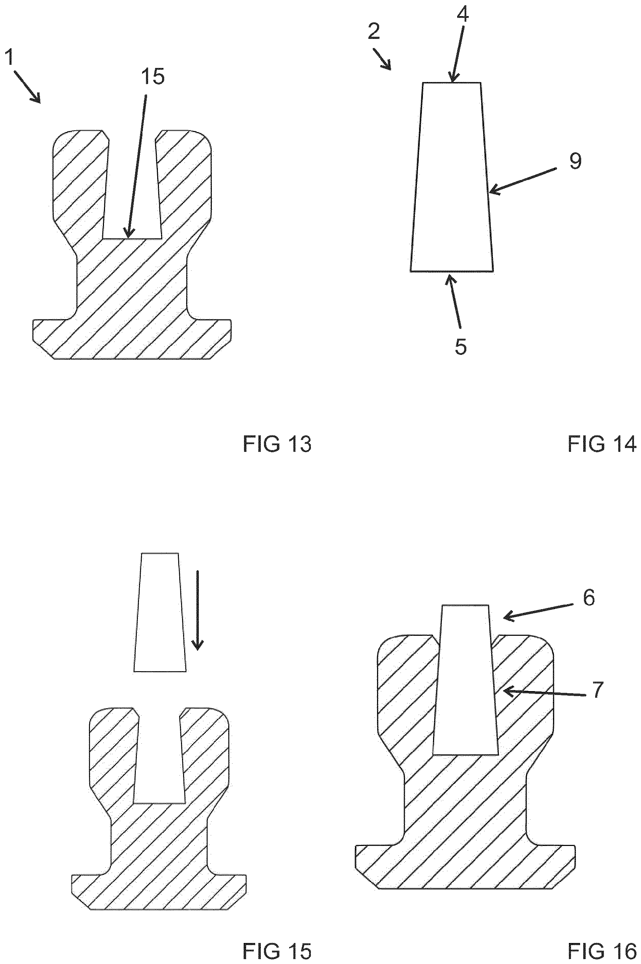

The method comprises providing at least one of i) the insertion section 7 of the stud pin 2 with a first tapering section 9 that tapers for example in a beveled and/or rounded manner toward the distal end 5 of the stud pin 2, and ii) a mouth 18 of the blind hole 3 of the supporting part 1 with a beveled and/or rounded edge. In the embodiment illustrated in figures 1 to 4, a first tapering section 9 is provided, but the mouth 18 of the blind hole 3 is not provided with a beveled and/or rounded edge. In the embodiment illustrated in figures 13 to 18, no first tapering section is provided, but the mouth 18 of the blind hole 3 is provided with a beveled edge 3. In the other embodiments, a first tapering section 9 is provided, and the mouth 18 of the blind hole 3 is provided with a beveled and/or rounded edge

The method comprises pressing the insertion section 7 of the stud pin 2 into the blind hole 3 of the supporting part 1 with the distal end 5 of the stud pin 2 leading the insertion section 7 of the stud pin 2 so that said largest cross section B of the first holding section 16 of the stud pin 2 at least partly passes said smallest cross-section A of the second holding section 17 of the blind hole 3 of the supporting part 1. Because the supporting part 1 is made of elastic or elastically deformable material, the largest cross section B of the first holding section 16 of the stud pin 2 can at least partly pass the smallest cross-section A of the second holding section 17 of the blind hole 3 of the supporting part 1.

A purpose of the first holding section 16 of the stud pin 2 and of the second holding section 17 of the blind hole 3 of the supporting part 1 to retain the stud pin 2 in the blind hole 3 of the supporting part 1.

A purpose of the first tapering section 9 of the insertion section 7 of the stud pin 2 and/or of the beveled or rounded edge of the mouth 18 of the blind hole 3 of the supporting part 1 is to enable pressing of the stud pin 2 into the blind hole 3 of the supporting part 1.

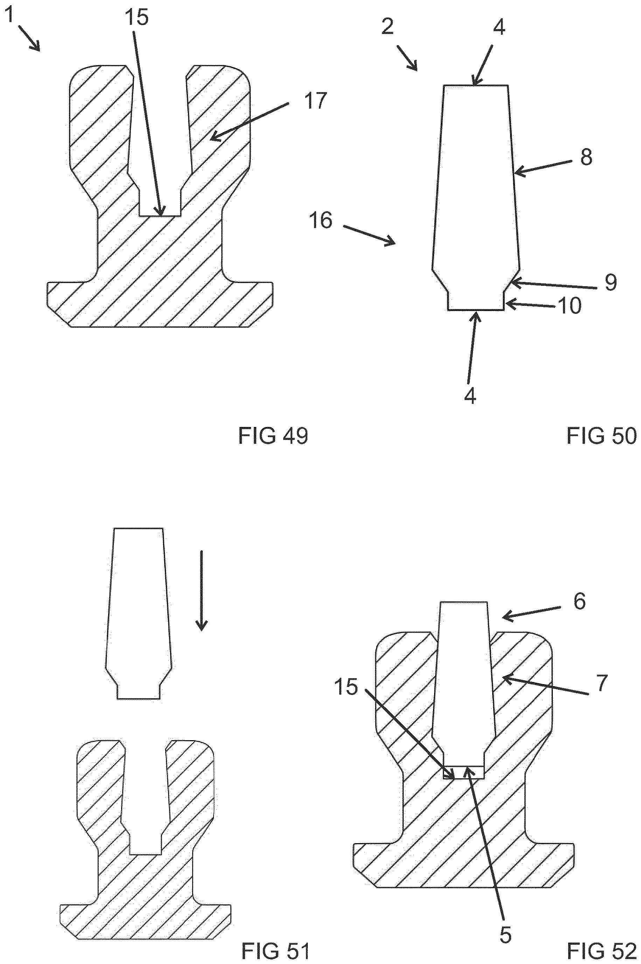

The insertion section 7 of the stud pin 2 can be provided with a first holding section 16 in the form of a first enlargement (nor marked with a reference numeral), as is the case in the embodiments shown in the figures and the blind hole 3 of the supporting part 1 can be provided with a second holding section 17 in the form of a second enlargement (nor marked with a reference numeral), as is the case in the first to ninth embodiment illustrated in figures 1 to 36 and in the thirteenth embodiment illustrated in figures 49 to 52. In such cases, pressing of the insertion section 7 of the stud pin 2 into the blind hole 2 of the supporting part 1 causes the largest cross section B of the first holding section 16 of the stud pin 2 to pass the smallest cross-section A of the second holding section 17 of the blind hole 3 of the supporting part 1.

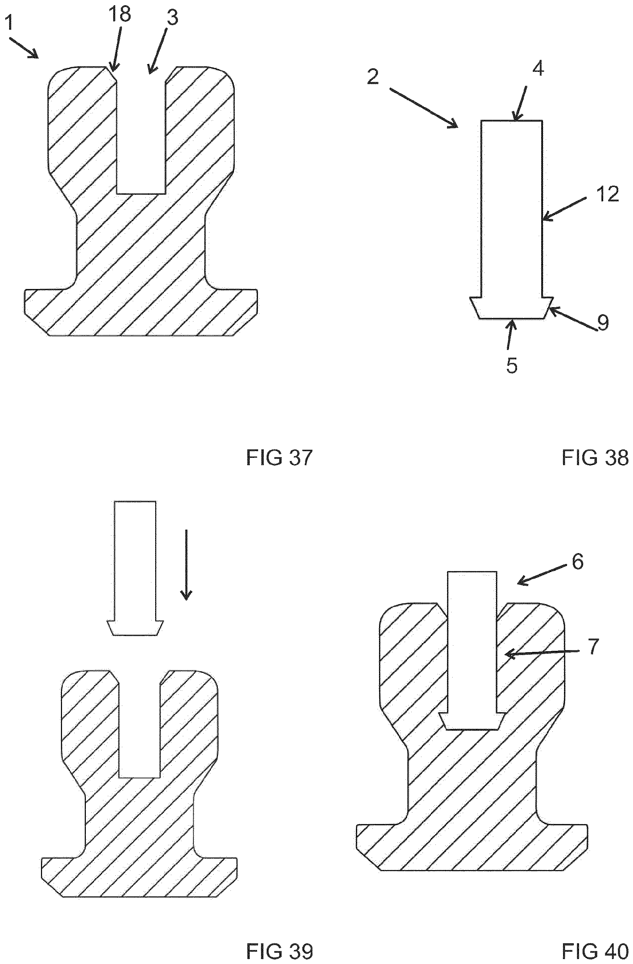

Alternatively, the insertion section 7 of the stud pin 2 can be provided with a first holding section 16 in the form of a first enlargement (nor marked with a reference numeral), as is the case in the embodiments shown in the figures and the cross-section of the blind hole 3 of the supporting part 1 can be essentially the same throughout the blind hole 3 of the supporting part 1, as is the case in the tenth to twelfth embodiment illustrated in figures 37 to 48. In such cases, pressing of the insertion section 7 of the stud pin 2 into the blind hole 2 of the supporting part 1 causes the largest cross section B of the first holding section 16 of the stud pin 2 to only partly pass the smallest cross-section A of the second holding section 17 of the blind hole 3 of the supporting part 1. Because the supporting part 1 is made of elastic or elastically deformable material, the first holding section 16 of the insertion section 7 of the stud pin 2 will cause an enlargement in the blind hole 3 of the supporting part 1.

The first holding section 16 of the insertion section 7 of the stud pin 2 that is provided can have a second tapering section 8 that tapers towards the proximal end 4 of the stud pin 2, as is the case in the embodiments illustrated in figures 1 to 32 and in figures 45 to 52.

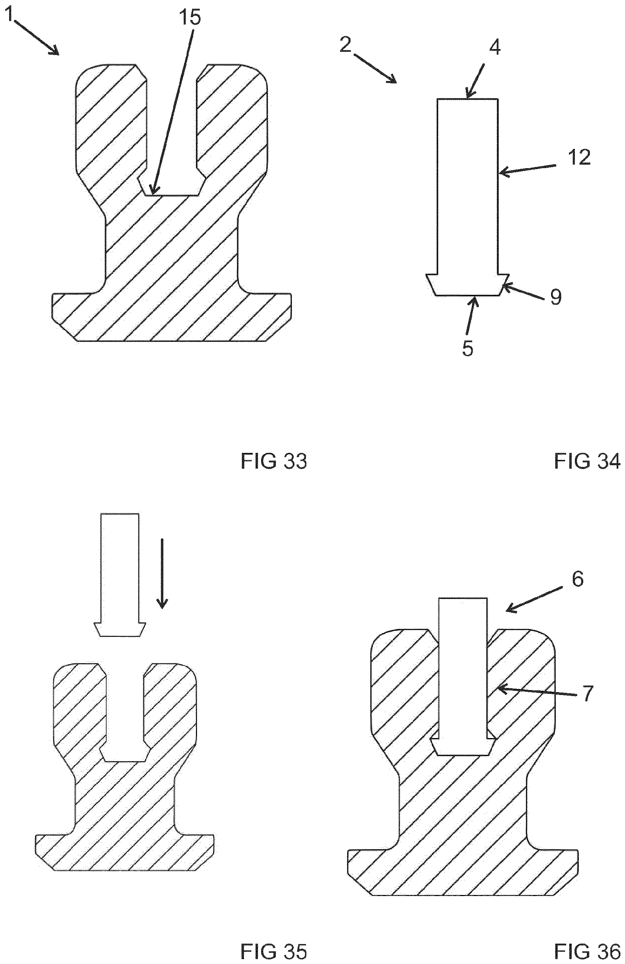

The insertion section 7 of the stud pin 2 that is provided is between the first holding section 16 and the protruding grip section 6 comprise a top section 12, which cross section is essentially the same throughout the top section as illustrated in the embodiments illustrated in figures 33 to 40.

The form and the dimensions of at least a part of the blind hole 3 of the supporting part 1 that is provided corresponds preferably, but not necessarily, essentially to the form and to the dimensions of at least a part of the insertion section 7 of the stud pin 2. This provides for a tight fit between the insertion section 7 of the stud pin 2 and the blind hole 3 of the supporting part 1, which extends the service-life of the anti-skid stud, because the stud pin 2 is well-retained in the supporting part 1.

The method can comprise pressing the insertion section 7 of the stud pin 2 into the blind hole 3 of the supporting part 1 with the distal end 5 leading the stud pin 2 until the distal end 5 of the stud pin 2 abuts the bottom 15 of the blind hole 3 and until the protruding grip section 6 of the stud pin 2 is located outside the blind hole 3, as in the embodiments illustrated in figures 1 to 48. An advantage of this is that the stud pin 2 is then prevented from sinking deeper into the blind hole 3 of the supporting part 1.

Alternatively, the method can comprise pressing the insertion section 7 of the stud pin 2 into the blind hole 3 of the supporting part 1 with the distal end 5 leading the stud pin 2 until the distal end 5 of the stud pin 2 is at a distance from the bottom 15 of the blind hole 3 and until the protruding grip section 6 of the stud pin 2 is located outside the blind hole 3, as in the thirteenth embodiment illustrated in figures 49 to 52. In such case the first holding section 16 of the insertion section 7 of the stud pin 2 can together with the second holding section 17 of the blind hole 3 of the supporting part 1 be configured to prevent the stud pin 2 from sinking deeper into the blind hole 3 of the supporting part 1. An advantage of this embodiment is that the length of the stud pin 2 has then a smaller impact on the length of the protruding grip section 6 of the stud pin 2.

In the method, the second section 9 of the insertion section 7 can extend directly from the distal end 5 in the stud pin 2 that is provided, as in the embodiments shown in figures 1 to 48.

In the method, the stud pin 2 that is provided can comprise a leading section 10 between the first tapering section 9 of the first holding section 16 of the insertion section 7 of the stud pin 2 and the distal end 5 of the stud pin 2, provided that the stud pin 2 is provided with such first tapering section 9, as in the thirteenth embodiment shown in figures 49 to 52.

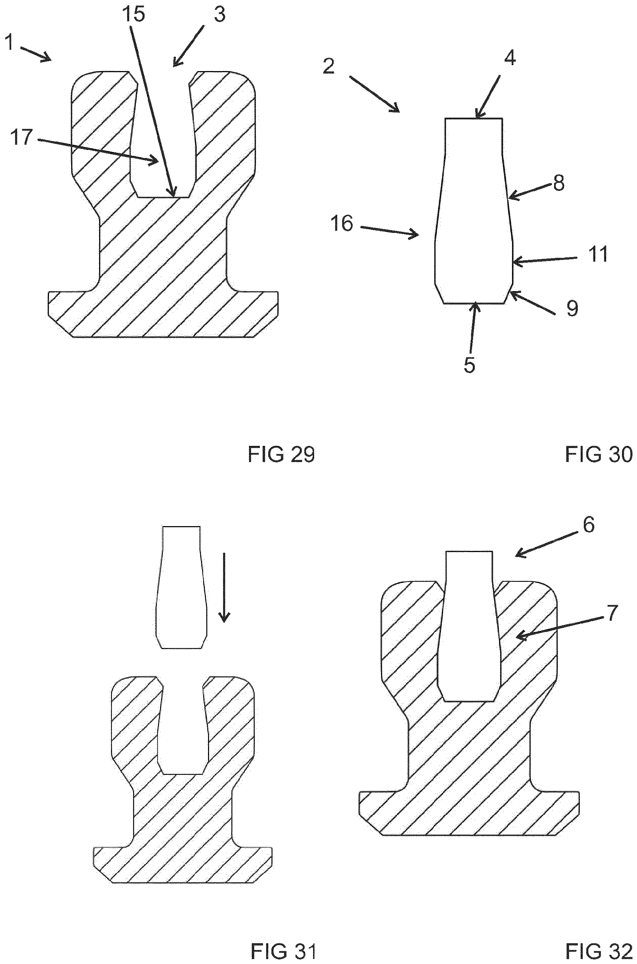

In the method, the stud pin 2 that is provided can comprise a middle section 11 between the first tapering section 9 of the first holding section 16 of the insertion section 7 and the second tapering section 8 of the first holding section 16 of the insertion section 7, provided that the stud pin 2 comprises such first tapering section 9 and such second tapering section 8, as in the eight embodiment shown in figures 29 to 32.

In the method, the stud pin 2 that is provided can comprise a top section 12 between the second tapering section 8 of the insertion section 7 and the protruding grip section 6, provided that the stud pin 2 comprises such second tapering section 8, as in the seventh embodiment shown in figured 25 to 28.

In the method, the second tapering section 8 of the insertion section 7 can extend directly from the protruding grip section 6 of the stud pin 2 that is provided, provided that the stud pin 2 comprises such second tapering section 8, as in the embodiments shown in figures 1 to 24,.

The optional second tapering section 8 of the first holding section 16 of the insertion section 7 of the stud pin 2 can be in the form of a first truncated cone, and the optional first tapering section 9 of the first holding section 16 of the insertion section 7 of the stud pin 2 can be in the form of a second truncated cone.

The insertion section 7 of the stud pin 2 that is provided can have a form enabling inserting the stud pin 2 only in one position into the blind hole 3 of the supporting part 1.

The method can comprise providing the second holding section 17 of the blind hole 3 of the supporting part 1 with an undercut recess (not marked with a reference numeral), wherein the first holding section 16 of the insertion section 7 of the stud pin 2 is configured to latch into the undercut recess of the second holding section 17 of the blind hole 3 of the supporting part 1 when pressing the insertion section 7 of the stud pin 2 into the blind hole 3 of the supporting part 1. An advantage of this is that is then easy to press the stud pin 2 into a correct position blind hole 3 in the supporting part 1.

The method can comprise providing the supporting part 1 with a top flange 13 and with a bottom flange 14. This enhances keeping of the anti-skid stud in a tire, when the anti-skid stud is mounted in a recess in a tire.

The supporting body can comprise a ridge or a tooth or a spline on the outer surface of the supporting body. Additionally or alternatively, the supporting part 1 can have an outer form diverging from the form of a solid of revolution An advantage of this is that the anti-skid stud is prevented from rotating a recess of the tire when mounted in a recess in a tire and the anti-skid stud is kept in a predetermined rotational position with respect to the tire. This also allows to insert the anti-skid stud into a recess in a tire with a machine in a predetermined position and promotes also retaining of the anti-skid stud in a tire.

The method can comprise heating at least one of the supporting part 1 and the stud pin 2 prior pressing the insertion section 7 of the stud pin 2 into the blind hole 3 of the supporting part 1. An advantage of this is that it is then easier to press the stud pin 2 into the blind hole 3, because the supporting part 1 softens and can better yield during the pressing.

Next the anti-skid stud comprising a supporting part 1 and a stud pin 2 that is partly arranged in a blind hole 3 in the supporting part 1 and some variants and embodiments of the anti-skid stud will be described in greater detail.

The anti-skid stud comprises a supporting part 1 that is made of elastic or of elastically deformable material such as of polymer and that has a blind hole 3, and a stud pin 2 having a proximal end 4 and a distal end 5. The stud pin 2 can be made of or comprise hard material such as metal, and comprises preferably, but not necessarily, hard metal such as tungsten carbide and/or other carbides.

The elastic or elastically deformable material the supporting part 1 isessentially homogenous and/or free of fibers. An advantage of such material is the capably to deform elastically without breaking.

The stud pin 2 comprises a protruding grip section 6 and an insertion section 7 having at least one first holding section 16. In the embodiments illustrated in figures 1 to 40 and in figures 45 to 52, the insertion section 7 of the stud pin 2 has one first holding section 16 and in the eleventh embodiment illustrated in figures 41 to 44, the insertion section 7 of the stud pin 2 has two first holding sections 16.

The blind hole 3 of the supporting part 1 has a bottom 15 and a second holding section 17 having a smallest cross-section A that is smaller than a largest cross section B of the first holding section 16 of the insertion section 7 of the stud pin 2.

At least one of the insertion section 7 of the stud pin 2 is provided with a first tapering section 9 that tapers for example in a beveled and/or rounded manner toward the distal end 5 of the stud pin 2 and a mouth 18 of the blind hole 3 of the supporting part 1 is provided with a beveled and/or rounded edge. In the embodiment illustrated in figures 1 to 4, a first tapering section 9 is provided, but the mouth 18 of the blind hole 3 is not provided with a beveled and/or rounded edge. In the embodiment illustrated in figures 13 to 18, no first tapering section is provided, but the mouth 18 of the blind hole 3 is provided with a beveled edge 3. In the other embodiments, a first tapering section 9 is provided, and the mouth 18 of the blind hole 3 is provided with a beveled and/or rounded edge

Said insertion section 7 of the stud pin 2 is retained in the blind hole 3 of the supporting part 1 by a form-fit and/or press-fit connection between the insertion section 7 of the stud pin 2 and the blind hole 3 of the supporting part 1. A form-fit and press-fit connection is achieved by providing the blind hole 3 of the supporting part 1 and the insertion section 7 of the stud pin 2 with an at least partly matching design and by making the dimensions of the blind hole 3 of the supporting part 1 smaller than the dimensions of the insertion section 16 of the stud pin.

Said largest cross section B of the first holding section 16 of the insertion section 7 of the stud pin 2 is arranged between the bottom 15 of the blind hole 3 of the supporting part 1 and said smallest cross-section A of the second holding section 17 of the blind hole 3 of the supporting part 1.

A purpose of the first holding section 16 of the stud pin 2 and of the second holding section 17 of the blind hole 3 of the supporting part 1 to retain the stud pin 2 in the blind hole 3 of the supporting part 1.

A purpose of the first section 9 of the insertion section 7 of the stud pin 2 or of the beveled or rounded edge of the mouth 18 of the blind hole 3 of the supporting part 1 is to enable pressing of the stud pin 2 into the blind hole 3 of the supporting part 1, when manufacturing the anti-skid stud.

The insertion section 7 of the stud pin 2 can be provided with a first holding section 16 in the form of a first enlargement (nor marked with a reference numeral), as is the case in the embodiments shown in the figures and the blind hole 3 of the supporting part 1 can be provided with a second holding section 17 in the form of a second enlargement (nor marked with a reference numeral), as is the case in the first to ninth embodiment illustrated in figures 1 to 36 and in the thirteenth embodiment illustrated in figures 49 to 52. In such cases, the largest cross section B of the first holding section 16 of the stud pin 2 is between the smallest cross-section A of the second holding section 17 of the blind hole 3 of the supporting part 1 and the bottom 15 of the blind hole 3 of the supporting part 1 in the anti-skid stud.

Alternatively, the insertion section 7 of the stud pin 2 can be provided with a first holding section 16 in the form of a first enlargement (nor marked with a reference numeral), as is the case in the embodiments shown in the figures and the cross-section of the blind hole 3 of the supporting part 1 can be essentially the same throughout the blind hole 3 of the supporting part 1, as is the case in the tenth to twelfth embodiment illustrated in figures 37 to 48. In such cases, the largest cross section B of the first holding section 16 of the stud pin 2 can be considered to be at the smallest cross-section A of the second holding section 17 of the blind hole 3 of the supporting part 1. Because the supporting part 1 is made of elastic or elastically deformable material, the first holding section 16 of the insertion section 7 of the stud pin 2 will however cause an enlargement in the blind hole 3 of the supporting part 1.

The first holding section 16 of the insertion section 7 of the stud pin 2 can have a second tapering section 8 that tapers towards the proximal end 4 of the stud pin 2, as in the embodiments illustrated in figures 1 to 32 and in figures 45 to 52.

According to the invention, the insertion section 7 of the stud pin 2 comprise between the first holding section 16 and the protruding grip section 6 a top section 12, which cross section is essentially the same throughout the top section as illustrated in the embodiments illustrated in figures 33 to 40.The form and the dimensions of at least a part of the blind hole 3 of the supporting part 1 corresponding preferably, but not necessarily, essentially to the form and to the dimensions of at least a part of the insertion section 7 of the stud pin 2.

The distal end 5 of the stud pin 2 can abut the bottom 15 of the blind hole 3 of the supporting part 1 so that the protruding grip section 6 of the stud pin 2 is located outside the blind hole 3 of the supporting part 1, as in the embodiments illustrated in figures 1 to 48.

Alternatively, the distal end 5 of the stud pin 2 can be located at a distance from the bottom 15 of the blind hole 3 of the supporting part 1 so that the protruding grip section 6 of the stud pin 2 is located outside the blind hole 3 of the supporting part 1, as in the embodiment illustrated in figures 49 to 52.

The stud pin 2 can comprise a leading section 10 between the first tapering section 9 of the first holding section 16 of the insertion section 7 of the stud pin 2 and the distal end 5 of the stud pin 2, provided that the stud pin 2 is provided with such first tapering section 9, as in the thirteenth embodiment shown in figures 49 to 52.

The stud pin 2 can comprise a middle section 11 between the first tapering section 9 of the first holding section 16 of the insertion section 7 and the second tapering section 8 of the first holding section 16 of the insertion section 7, provided that the stud pin 2 comprises such first tapering section 9 and such second tapering section 8, as in the eight embodiment shown in figures 29 to 32.

The stud pin 2 can comprise a top section 12 between the second tapering section 8 of the insertion section 7 and the protruding grip section 6, provided that the stud pin 2 comprises such second tapering section 8, as in the seventh embodiment shown in figured 25 to 28.

The second tapering section 8 of the insertion section 7 can extend directly from the protruding grip section 6 of the stud pin 2 that is provided, provided that the stud pin 2 comprises such second tapering section 8, as in the embodiments shown in figures 1 to 24 and 29 to 32 and 45 to 52.

The optional second tapering section 8 of the first holding section 16 of the insertion section 7 of the stud pin 2 can be in the form of a first truncated cone, and the optional first tapering section 9 of the first holding section 16 of the insertion section 7 of the stud pin 2 can be in the form of a second truncated cone.

The insertion section 7 of the stud pin 2 can have a form diverging from the form of a solid of revolution, and the protruding grip section 6 of the stud pin 2 can have a form diverging from the form of a solid of revolution. An advantage of this is that the stud pin 2 is prevented from rotating in the blind hole 3 and the stud pin 2 is kept in a predetermined rotational position with respect to the blind hole 3.

Alternatively, the insertion section 7 of the stud pin 2 can have the form of a solid of revolution, and the protruding grip section 6 of the stud pin 2 can have the form of a solid of revolution.

The blind hole 3 of the supporting part 1 can be provided with an undercut recess, and the first holding section 16 of the insertion section 7 of the stud pin 2 can be latched into the undercut recess in the blind hole 3 of the supporting part 1. An advantage of this is that is then easy to press the stud pin 2 into a correct position blind hole 3 in the supporting part 1.

The supporting part 1 can be provided with a top flange 13 and with a bottom flange 14. This enhances keeping of the anti-skid stud in a tire, then the anti-skid stud is mounted in a recess in a tire.

The supporting body can comprise a ridge or a tooth or a spline on the outer surface of the supporting body. Additionally or alternatively, the supporting part 1 can have an outer form diverging from the form of a solid of revolution An advantage of this is that the anti-skid stud is prevented from rotating a recess of the tire when mounted in a recess in a tire and the anti-skid stud is kept in a predetermined rotational position with respect to the tire.

It is apparent to a person skilled in the art that as technology advanced, the basic idea of the invention can be implemented in various ways. The invention and its embodiments are therefore not restricted to the above examples, but they may vary within the scope of the appended claims.

## Claims

1. A method for producing an anti-skid stud comprising a supporting part (1) and a stud pin (2) that is partly arranged in a blind hole (3) in the supporting part (1), wherein method comprises
providing a supporting part (1) that is made of elastic material, which is essentially homogenous and/or is free of fibers, such as of polymer and that has a blind hole (3), and
providing a stud pin (2) having a proximal end (4) and a distal end (5), the stud pin (2) is provided comprising a protruding grip section (6) and an insertion section (7) having a first holding section (16),
the blind hole (3) of the supporting part (1) is provided having a bottom (15) and a second holding section (17) having a smallest cross-section A that is smaller than a largest cross section B of the first holding section (16) of the insertion section of the stud pin (2) that is provided the method is **characterized**
**by** providing at least one of i) the insertion section (7) of the stud pin (2) with a first tapering section (9) that tapers toward the distal end (5) of the stud pin (2), and ii) a mouth (18) of the blind hole (3) of the supporting part (1) with a beveled and/or rounded edge,
by pressing the insertion section (7) of the stud pin (2) into the blind hole (3) of the supporting part (1) with the distal end (5) leading the insertion section (7) of the stud pin (2) so that said largest cross section B of the first holding section (16) of the stud pin (2) at least partly passes said smallest cross-section A of the second holding section (17) of the blind hole (3) of the supporting part (1),
by the first holding section (16) of the stud pin (2) that is provided is located at the distal end (5) of the stud pin (2), and
by the inserting section (7) of the stud pin (2) that is provided has between the first holding section (16) of the stud pin and the protruding grip section (6) of the stud pin (2) a top section (12) which cross section which is essentially the same throughout the top section (12).

2. The method according to claim 1, **characterized**
**by** the first holding section (16) of the insertion section (7) of the stud pin (2) that is provided having a second tapering section (8) that tapers towards the proximal end (4) of the stud pin (2).

3. The method according to claim 1 or 2, **characterized**
**by** the form and the dimensions of at least a part of the blind hole (3) of the supporting part (1) that is provided corresponding essentially to the form and to the dimensions of at least a part of the insertion section (7) of the stud pin (2).

4. The method according to any of the claims 1 to 3, **characterized**
**by** pressing the insertion section (7) of the stud pin (2) into the blind hole (3) of the supporting part (1) with the distal end (5) leading the stud pin (2) until the distal end (5) of the stud pin (2) abuts the bottom (15) of the blind hole (3) and until the protruding grip section (6) of the stud pin (2) is located outside the blind hole (3).

5. The method according to any of the claims 1 to 3, **characterized**
**by** pressing the insertion section (7) of the stud pin (2) into the blind hole (3) of the supporting part (1) with the distal end (5) leading the stud pin (2) until the distal end (5) of the stud pin (2) is at a distance from the bottom (15) of the blind hole (3) and until the protruding grip section (6) of the stud pin (2) is located outside the blind hole (3).

6. The method according to any of the claims 1 to 5, **characterized**
**by** the insertion section (7) of the stud pin (2) that is provided having a form diverging from the form of a solid of revolution, and
by the protruding grip section (6) of the stud pin (2) that is provided having a form diverging from the form of a solid of revolution.

7. The method according to any of the claims 1 to 6, **characterized**
**by** the insertion section (7) of the stud pin (2) that is provided having a form enabling inserting the stud pin (2) only in one position into the blind hole (3) of the supporting part (1).

8. The method according to any of the claims 1 to 7, **characterized**
**by** providing the blind hole (3) of the supporting part (1) with an undercut recess, and
by the first holding section (16) of the insertion section (7) of the stud pin (2) being configured to latch into the undercut recess when pressing the insertion section (7) of the stud pin (2) into the blind hole (3) of the supporting part (1).

9. The method according to any of the claims 1 to 8, **characterized**
**by** providing the supporting part (1) with a top flange (13) and with a bottom flange (14).

10. The method according to any of the claims 1 to 9, **characterized**
**by** heating at least one of the supporting part (1) and the stud pin (2) prior pressing the insertion section (7) of the stud pin (2) into the blind hole (3) of the supporting part (1).

11. The method according to any of the claims 1 to 10, **characterized**
**by** said elastic material being elastically deformable material.

12. An anti-skid stud comprising a supporting part (1) and a stud pin (2) that is partly arranged in a blind hole (3) in the supporting part (1), wherein the anti-skid stud comprises
a supporting part (1) that is made of elastic material, which is essentially homogenous and/or free of fibers, such as of polymer and that has a blind hole (3), and
a stud pin (2) having a proximal end (4) and a distal end (5)
wherein
the stud pin (2) comprising a protruding grip section (6) and an insertion section (7) having a first holding section (16),
the blind hole (3) of the supporting part (1) having a second holding section (17) having a smallest cross-section A that is smaller than a largest cross-section B of the first holding section (16) of the insertion section (7) of the stud pin (2; said largest cross-section B of the first holding section (16) of the insertion section (7) of the stud pin (2) is between a bottom (15) of the blind hole (3) of the supporting part (1) and said smallest cross-section A of the second holding section (17) of the blind hole (3) of the supporting part (1),
the anti-skid stub being **characterized by** at least one of i) the insertion section (7) of the stud pin (2) being provided with a first tapering section (9) that tapers toward the distal end (5) of the stud pin (2), and ii) a mouth (18) of the blind hole (3) of the supporting part (1) being provided with a beveled and/or rounded edge,
by said insertion section (7) of the stud pin (2) being retained in the blind hole (3) of the supporting part (1) by a form-fit and/or press-fit connection between the insertion section (7) of the stud pin (2) and the blind hole (3) of the supporting part (1),
by the first holding section (16) of the stud pin (2) is provided at the distal end (5) of the stud pin (2), and
by the inserting section (7) of the stud pin (2) has between the first holding section (16) of the stud pin and the protruding grip section (6) of the stud pin (2) a top section (12) which cross section which is essentially the same throughout the top section (12).

13. The anti-skid stud according to claim 12, **characterized**
**by** the first holding section (16) of the insertion section (7) of the stud pin (2) having a second tapering section (8) that tapers towards the proximal end (4) of the stud pin (2).

14. The anti-skid stud according to claim 12 or 13, **characterized**
**by** the form and the dimensions of at least a part of the blind hole (3) of the supporting part (1) corresponding essentially to the form and to the dimensions of at least a part of the insertion section (7) of the stud pin (2).

15. The anti-skid stud according to any of the claims 12 to 14, **characterized**
**by** the distal end (5) of the stud pin (2) abuts the bottom (15) of the blind hole (3) of the supporting part (1) and by the protruding grip section (6) of the stud pin (2) is located outside the blind hole (3) of the supporting part (1).

16. The anti-skid stud according to any of the claims 12 to 14, **characterized**
**by** the distal end (5) of the stud pin (2) being located at a distance from the bottom (15) of the blind hole (3) of the supporting part (1) and by the protruding grip section (6) of the stud pin (2) being located outside the blind hole (3) of the supporting part (1).

17. The anti-skid stud according to any of the claims 12 to 16, **characterized**
**by** the insertion section (7) of the stud pin (2) having a form diverging from the form of a solid of revolution, and
by the protruding grip section (6) of the stud pin (2) having a form diverging from the form of a solid of revolution.

18. The anti-skid stud according to any of the claims 12 to 17, **characterized**
**by** the second holding section (17) of the blind hole (3) of the supporting part (1) being provided with an undercut recess, and
by the first holding section (16) of the insertion section (7) of the stud pin (2) being latched into the undercut recess in the blind hole (3) of the supporting part (1).

19. The anti-skid stud according to any of the claims 12 to 18, **characterized**
**by** the supporting body being provided with a top flange (13) and with a bottom flange (14).

20. The anti-skid stud according to any of the claims 12 to 19, **characterized**
**by** said elastic material being elastically deformable material.

## Patentansprüche

1. Verfahren zur Herstellung eines Gleitschutzstifts, der ein Tragteil (1) und einen Verschleißstift (2), der teilweise in einer Blindbohrung (3) im Tragteil (1) angeordnet ist, umfasst, wobei das Verfahren umfasst:
Bereitstellen eines Tragteils (1), das aus einem elastischen Material, das im Wesentlichen homogen und/oder frei von Fasern ist, wie einem Polymer, gefertigt ist und das eine Blindbohrung (3) aufweist, und
Bereitstellen eines Verschleißstifts (2) mit einem nahen Ende (4) und einem fernen Ende (5), wobei der Verschleißstift (2) so bereitgestellt wird, dass er einen vorspringenden Griffigkeitsabschnitt (6) und einen Einbauabschnitt (7) mit einem ersten Halterungsabschnitt (16) umfasst,
wobei die Blindbohrung (3) des Tragteils (1) so bereitgestellt wird, dass sie einen Bohrungsgrund (15) und einen zweiten Halterungsbereich (17) mit einem kleinsten Querschnitt A umfasst, der kleiner ist als ein größter Querschnitt B des ersten Halterungsabschnitts (16) des Einbauabschnitts des bereitgestellten Verschleißstifts (2),
wobei das Verfahren **dadurch gekennzeichnet ist,**
**dass** i) der Einbauabschnitt (7) des Verschleißstifts (2) mit einem ersten abgeschrägten Abschnitt (9), der sich zum fernen Ende (5) des Verschleißstifts (2) hin verjüngt, und/oder ii) ein Mundloch (18) der Blindbohrung (3) des Tragteils (1) mit einer abgefasten und/oder abgerundeten Kante versehen wird,
**dass** der Einbauabschnitt (7) des Verschleißstifts (2) mit dem fernen Ende (5) des Einbauabschnitts (7) des Verschleißstifts (2) voran in die Blindbohrung (3) des Tragteils (1) eingepresst wird, so dass der größte Querschnitt B des ersten Halterungsabschnitts (16) des Verschleißstifts (2) mindestens teilweise den kleinsten Querschnitt A des zweiten Halterungsabschnitts (17) der Blindbohrung (3) des Tragteils (1) passiert,
**dass** der erste Halterungsabschnitt (16) des bereitgestellten Verschleißstifts (2) am fernen Ende (5) des Verschleißstifts (2) angeordnet wird, und
**dass** der Einbauabschnitt (7) des bereitgestellten Verschleißstifts (2) zwischen dem ersten Halterungsabschnitt (16) des Verschleißstifts und dem vorspringenden Griffigkeitsabschnitt (6) des Verschleißstifts (2) einen oberen Abschnitt (12) aufweist, dessen Querschnitt über den gesamten oberen Abschnitt (12) hinweg im Wesentlichen gleich ist.

2. Verfahren nach Anspruch 1, **gekennzeichnet dadurch,**
**dass** der erste Halterungsabschnitt (16) des Einbauabschnitts (7) des bereitgestellten Verschleißstifts (2) einen zweiten abgeschrägten Abschnitt (8) aufweist, der sich zum nahen Ende (4) des Verschleißstifts (2) hin verjüngt.

3. Verfahren nach Anspruch 1 oder 2, **gekennzeichnet dadurch,**
**dass** die Form und die Abmessungen mindestens eines Teils der Blindbohrung (3) des bereitgestellten Tragteils (1) im Wesentlichen der Form und den Abmessungen mindestens eines Teils des Einbauabschnitts (7) des Verschleißstifts (2) entsprechen.

4. Verfahren nach einem der Ansprüche 1 bis 3, **gekennzeichnet dadurch,**
**dass** der Einbauabschnitt (7) des Verschleißstifts (2) mit dem fernen Ende (5) des Verschleißstifts (2) voran in die Blindbohrung (3) des Tragteils (1) so weit eingepresst wird, dass das ferne Ende (5) des Verschleißstifts (2) am Bohrungsgrund (15) der Blindbohrung (3) anschlägt und der vorspringende Griffigkeitsabschnitt (6) des Verschleißstifts (2) außerhalb der Blindbohrung (3) angeordnet ist.

5. Verfahren nach einem der Ansprüche 1 bis 3, **gekennzeichnet dadurch,**
**dass** der Einbauabschnitt (7) des Verschleißstifts (2) mit dem fernen Ende (5) des Verschleißstifts (2) voran in die Blindbohrung (3) des Tragteils (1) so weit eingepresst wird, dass das ferne Ende (5) des Verschleißstifts (2) abständig zum Bohrungsgrund (15) der Blindbohrung (3) ist und der vorspringende Griffigkeitsabschnitt (6) des Verschleißstifts (2) außerhalb der Blindbohrung (3) angeordnet ist.

6. Verfahren nach einem der Ansprüche 1 bis 5, **gekennzeichnet dadurch,**
**dass** der Einbauabschnitt (7) des bereitgestellten Verschleißstifts (2) eine Form aufweist, die von der Form eines Rotationskörpers abweicht, und
**dass** der vorspringende Griffigkeitsabschnitt (6) des bereitgestellten Verschleißstifts (2) eine Form aufweist, die von der Form eines Rotationskörpers abweicht.

7. Verfahren nach einem der Ansprüche 1 bis 6, **gekennzeichnet dadurch,**
**dass** der Einbauabschnitt (7) des bereitgestellten Verschleißstifts (2) eine Form aufweist, die dafür sorgt, dass der Verschleißstift (2) nur in einer Stellung in die Blindbohrung (3) des Tragteils (1) eingesetzt werden kann.

8. Verfahren nach einem der Ansprüche 1 bis 7, **gekennzeichnet dadurch,**
**dass** die Blindbohrung (3) des Tragteils (1) mit einer hinterschnittenen Aussparung versehen wird, und
**dass** der erste Halterungsabschnitt (16) des Einbauabschnitts (7) des Verschleißstifts (2) so ausgelegt ist, dass er in die hinterschnittene Aussparung einrastet, wenn der Einbauabschnitt (7) des Verschleißstifts (2) in die Blindbohrung (3) des Tragteils (1) eingepresst wird.

9. Verfahren nach einem der Ansprüche 1 bis 8, **gekennzeichnet dadurch,**
**dass** das Tragteil (1) mit einer oberen Wange (13) und mit einer unteren Wange (14) versehen wird.

10. Verfahren nach einem der Ansprüche 1 bis 9, **gekennzeichnet dadurch,**
**dass** das Tragteil (1) und/oder der Verschleißstift (2) erhitzt werden, bevor der Einbauabschnitt (7) des Verschleißstifts (2) in die Blindbohrung (3) des Tragteils (1) eingepresst wird.

11. Verfahren nach einem der Ansprüche 1 bis 10, **gekennzeichnet dadurch,**
**dass** das elastische Material ein elastisch verformbares Material ist.

12. Gleitschutzstift, der ein Tragteil (1) und einen Verschleißstift (2), der teilweise in einer Blindbohrung (3) im Tragteil (1) angeordnet ist, umfasst, wobei der Gleitschutzstift umfasst:
ein Tragteil (1), das aus einem elastischen Material, das im Wesentlichen homogen und/oder frei von Fasern ist, wie einem Polymer, gefertigt ist und das eine Blindbohrung (3) aufweist, und
einen Verschleißstift (2) mit einem nahen Ende (4) und einem fernen Ende (5),
wobei
der Verschleißstift (2) einen vorspringenden Griffigkeitsabschnitt (6) und einen Einbauabschnitt (7) mit einem ersten Halterungsabschnitt (16) umfasst,
die Blindbohrung (3) des Tragteils (1) einen zweiten Halterungsabschnitt (17) mit einem kleinsten Querschnitt A umfasst, der kleiner ist als ein größter Querschnitt B des ersten Halterungsabschnitts (16) des Einbauabschnitts (7) des Verschleißstifts (2), wobei sich der größte Querschnitt B des ersten Halterungsabschnitts (16) des Einbauabschnitts (7) des Verschleißstifts (2) zwischen einem Bohrungsgrund (15) der Blindbohrung (3) des Tragteils (1) und dem kleinsten Querschnitt A des zweiten Halterungsabschnitts (17) der Blindbohrung (3) des Tragteils (1) befindet,
wobei der Gleitschutzstift **dadurch gekennzeichnet ist,**
**dass** i) der Einbauabschnitt (7) des Verschleißstifts (2) mit einem ersten abgeschrägten Abschnitt (9), der sich zum fernen Ende (5) des Verschleißstifts (2) hin verjüngt, versehen ist und/oder ii) ein Mundloch (18) der Blindbohrung (3) des Tragteils (1) mit einer abgefasten und/oder abgerundeten Kante versehen ist,
**dass** der Einbauabschnitt (7) des Verschleißstifts (2) in der Blindbohrung (3) des Tragteils (1) durch eine formschlüssige Verbindung und/oder eine Einpressverbindung zwischen dem Einbauabschnitt (7) des Verschleißstifts (2) und der Blindbohrung (3) des Tragteils (1) gehalten wird,
**dass** der erste Halterungsabschnitt (16) des Verschleißstifts (2) am fernen Ende (5) des Verschleißstifts (2) vorgesehen ist, und
**dass** der Einbauabschnitt (7) des Verschleißstifts (2) zwischen dem ersten Halterungsabschnitt (16) des Verschleißstifts und dem vorspringenden Griffigkeitsabschnitt (6) des Verschleißstifts (2) einen oberen Abschnitt (12) aufweist, dessen Querschnitt über den gesamten oberen Abschnitt (12) hinweg im Wesentlichen gleich ist.

13. Gleitschutzstift nach Anspruch 12, **gekennzeichnet dadurch,**
**dass** der erste Halterungsabschnitt (16) des Einbauabschnitts (7) des Verschleißstifts (2) einen zweiten abgeschrägten Abschnitt (8) aufweist, der sich zum nahen Ende (4) des Verschleißstifts (2) hin verjüngt.

14. Gleitschutzstift nach Anspruch 12 oder 13, **gekennzeichnet dadurch,**
**dass** die Form und die Abmessungen mindestens eines Teils der Blindbohrung (3) des Tragteils (1) im Wesentlichen der Form und den Abmessungen mindestens eines Teils des Einbauabschnitts (7) des Verschleißstifts (2) entsprechen.

15. Gleitschutzstift nach einem der Ansprüche 12 bis 14, **gekennzeichnet dadurch,**
**dass** das ferne Ende (5) des Verschleißstifts (2) am Bohrungsgrund (15) der Blindbohrung (3) des Tragteils (1) anschlägt und der vorspringende Griffigkeitsabschnitt (6) des Verschleißstifts (2) außerhalb der Blindbohrung (3) des Tragteils (1) angeordnet ist.

16. Gleitschutzstift nach einem der Ansprüche 12 bis 14, **gekennzeichnet dadurch,**
**dass** das ferne Ende (5) des Verschleißstifts (2) abständig zum Bohrungsgrund (15) der Blindbohrung (3) des Tragteils (1) angeordnet ist und der vorspringende Griffigkeitsabschnitt (6) des Verschleißstifts (2) außerhalb der Blindbohrung (3) des Tragteils (1) angeordnet ist.

17. Gleitschutzstift nach einem der Ansprüche 12 bis 16, **gekennzeichnet dadurch,**
**dass** der Einbauabschnitt (7) des Verschleißstifts (2) eine Form aufweist, die von der Form eines Rotationskörpers abweicht, und
**dass** der vorspringende Griffigkeitsabschnitt (6) des Verschleißstifts (2) eine Form aufweist, die von der Form eines Rotationskörpers abweicht.

18. Gleitschutzstift nach einem der Ansprüche 12 bis 17, **gekennzeichnet dadurch,**
**dass** der zweite Halterungsabschnitt (17) der Blindbohrung (3) des Tragteils (1) mit einer hinterschnittenen Aussparung versehen ist, und
**dass** der erste Halterungsabschnitt (16) des Einbauabschnitts (7) des Verschleißstifts (2) in die hinterschnittene Aussparung in der Blindbohrung (3) des Tragteils (1) einrastet.

19. Gleitschutzstift nach einem der Ansprüche 12 bis 18, **gekennzeichnet dadurch,**
**dass** der Tragkörper mit einer oberen Wange (13) und mit einer unteren Wange (14) versehen ist.

20. Gleitschutzstift nach einem der Ansprüche 12 bis 19, **gekennzeichnet dadurch,**
**dass** das elastische Material ein elastisch verformbares Material ist.

## Revendications

1. Procédé de fabrication d'un crampon antidérapant comprenant une pièce d'embase (1) et une cheville de crampon (2) qui est partiellement disposée dans un trou borgne (3) dans la pièce d'embase (1), ledit procédé comprenant les étapes consistant à :
fournir une pièce d'embase (1) qui est faite d'un matériau élastique essentiellement homogène et/ou libre de fibres, tel qu'un polymère, et qui comporte un trou borgne (3), et
fournir une cheville de crampon (2) comportant une extrémité proximale (4) et une extrémité distale (5), ladite cheville de crampon (2) étant fournie de manière à comprendre une partie d'usure protubérante (6) et une partie d'insertion (7) comportant une première partie de support (16),
ledit trou borgne (3) de la pièce d'embase (1) étant fournie de manière à comporter un fond de trou (15) et une deuxième partie de support (17) comportant une section transversale minimale A qui est inférieure à une section transversale maximale B de la première partie de support (16) de la partie d'insertion de la cheville de crampon (2) qui est fournie,
ledit procédé étant **caractérisé par** les étapes consistant à
munir au moins l'une parmi i) la partie d'insertion (7) de la cheville de crampon (2) d'un premier tronçon conique (9) diminuant vers l'extrémité distale (5) de la cheville de crampon (2) et ii) une bouche (18) du trou borgne (3) de la pièce d'embase (1) d'une arête chanfreinée et/ou arrondie,
presser la partie d'insertion (7) de la cheville de crampon (2) dans le trou borgne (3) de la pièce d'embase (1), avec l'extrémité distale (5) de la partie d'insertion (7) de la cheville de crampon (2) en premier, de telle façon que ladite section transversale maximale B de la première partie de support (16) de la cheville de crampon (2) passe, au moins partiellement, par la section transversale minimale A de la deuxième partie de support (17) du trou borgne (3) de la pièce d'embase (1),
ladite première partie de support (16) de la cheville de crampon (2), qui est fournie, étant disposée à l'extrémité distale (5) de la cheville de crampon (2), et
ladite partie d'insertion (7) de la cheville de crampon (2), qui est fournie, comportant entre la première partie de support (16) de la cheville de crampon (2) et la partie d'usure protubérante (6) de la cheville de crampon (2) une partie supérieure (12) dont la section transversale est essentiellement égale à travers la partie supérieure entière (12).

2. Procédé selon la revendication 1, **caractérisé en ce**
**que** la première partie de support (16) de la partie d'insertion (7) de la cheville de crampon (2), qui est fournie, comporte un deuxième tronçon conique (8) diminuant vers l'extrémité proximale (4) de la cheville de crampon (2).

3. Procédé selon la revendication 1 ou 2, **caractérisé en ce**
**que** la forme et les dimensions d'au moins une partie du trou borgne (3) de la pièce d'embase (1), qui est fournie, correspondent essentiellement à la forme et aux dimensions d'au moins une partie de la partie d'insertion (7) de la cheville de crampon (2).

4. Procédé selon l'une des revendications 1 à 3, **caractérisé en ce**
**que** la partie d'insertion (7) de la cheville de crampon (2) est pressée dans le trou borgne (3) de la pièce d'embase (1), avec l'extrémité distale (5) de la cheville de crampon (2) en premier, jusqu'au point où l'extrémité distale (5) de la cheville de crampon (2) bute contre le fond (15) du trou borgne (3) et où la partie d'usure protubérante (6) de la cheville de crampon (2) est disposée à l'extérieur du trou borgne (3).

5. Procédé selon l'une des revendications 1 à 3, **caractérisé en ce**
**que** la partie d'insertion (7) de la cheville de crampon (2) est pressée dans le trou borgne (3) de la pièce d'embase (1), avec l'extrémité distale (5) de la cheville de crampon (2) en premier, jusqu'au point où l'extrémité distale (5) de la cheville de crampon (2) se situe à une distance par rapport au fond (15) du trou borgne (3) et où la partie d'usure protubérante (6) de la cheville de crampon (2) est disposée à l'extérieur du trou borgne (3).

6. Procédé selon l'une des revendications 1 à 5, **caractérisé en ce**
**que** la partie d'insertion (7) de la cheville de crampon (2), qui est fournie, présente une forme qui diffère de la forme d'un corps de révolution, et
**que** la partie d'usure protubérante (6) de la cheville de crampon (2), qui est fournie, présente une forme qui diffère de la forme d'un corps de révolution.

7. Procédé selon l'une des revendications 1 à 6, **caractérisé en ce**
**que** la partie d'insertion (7) de la cheville de crampon (2), qui est fournie, présente une forme qui n'autorise l'insertion de la cheville de crampon (2) qu'en une seule position dans le trou borgne (3) de la pièce d'embase (1).

8. Procédé selon l'une des revendications 1 à 7, **caractérisé en ce**
**que** le trou borgne (3) de la pièce d'embase (1) est munie d'une échancrure sous-jacente, et
**que** la première partie de support (16) de la partie d'insertion (7) de la cheville de crampon (2) est configurée pour se verrouiller dans l'échancrure sous-jacente lorsque la partie d'insertion (7) de la cheville de crampon (2) est pressée dans le trou borgne (3) de la pièce d'embase (1).

9. Procédé selon l'une des revendications 1 à 8, **caractérisé en ce**
**que** la pièce d'embase (1) est pourvue d'une joue supérieure (13) et d'une joue inférieure (14).

10. Procédé selon l'une des revendications 1 à 9, **caractérisé par** l'étape consistant à
réchauffer au moins une parmi la pièce d'embase (1) et la cheville de crampon (2) avant de presser la partie d'insertion (7) de la cheville de crampon (2) dans le trou borgne (3) de la pièce d'embase (1).

11. Procédé selon l'une des revendications 1 à 10, **caractérisé en ce**
**que** le matériau élastique est un matériau élastiquement déformable.

12. Crampon antidérapant comprenant une pièce d'embase (1) et une cheville de crampon (2) qui est partiellement disposée dans un trou borgne (3) dans la pièce d'embase (1), ledit crampon antidérapant comprenant :
une pièce d'embase (1) qui est faite d'un matériau élastique qui est essentiellement homogène et/ou libre de fibres, tel qu'un polymère, et qui comporte un trou borgne (3), et
une cheville de crampon (2) comportant une extrémité proximale (4) et une extrémité distale (5),
dans lequel
la cheville de crampon (2) comprend une partie d'usure protubérante (6) et une partie d'insertion (7) comportant une première partie de support (16),
le trou borgne (3) de la pièce d'embase (1) comporte une deuxième partie de support (17) comportant une section transversale minimale A qui est inférieure à une section transversale maximale B de la première partie de support (16) de la partie d'insertion (7) de la cheville de crampon (2), ladite section transversale maximale B de la première partie de support (3) de la partie d'insertion (7) de la cheville de crampon (2) étant située entre un fond (15) du trou borgne (3) de la pièce d'embase (1) et la section transversale minimale A de la deuxième partie de support (17) du trou borgne (3) de la pièce d'embase (1),
ledit crampon antidérapant étant **caractérisée en ce**
**qu'**au moins l'une parmi i) la partie d'insertion (7) de la cheville de crampon (2) est munie d'un premier tronçon conique (9) diminuant vers l'extrémité distale (5) de la cheville de crampon (2) et ii) une bouche (18) du trou borgne (3) de la pièce d'embase (1) est munie d'une arête chanfreinée et/ou arrondie,
**que** la partie d'insertion (7) de la cheville de crampon (2) est retenue dans le trou borgne (3) de la pièce d'embase (1) par une liaison de forme et/ou une liaison par pression entre la partie d'insertion (7) de la cheville de crampon (2) et le trou borgne (3) de la pièce d'embase (1),
**que** la première partie de support (16) de la cheville de crampon (2) est prévue à l'extrémité distale (5) de la cheville de crampon (2), et
**que** la partie d'insertion (7) de la cheville de crampon (2) comporte une partie supérieure (12) dont la section transversale est essentiellement égale à travers la partie supérieure entière (12) entre la première partie de support (16) de la cheville de crampon (2) et la partie d'usure protubérante (6) de la cheville de crampon (2).

13. Crampon antidérapant selon la revendication 12, **caractérisé en ce**
**que** la première partie de support (16) de la partie d'insertion (7) de la cheville de crampon (2) comporte un deuxième tronçon conique (8) diminuant vers l'extrémité proximale (4) de la cheville de crampon (2).

14. Crampon antidérapant selon la revendication 12 ou 13, **caractérisé en ce**
**que** la forme et les dimensions d'au moins une partie du trou borgne (3) de la pièce d'embase (1) correspondent essentiellement à la forme et aux dimensions d'au moins une partie de la partie d'insertion (7) de la cheville de crampon (2).

15. Crampon antidérapant selon l'une des revendications 12 à 14, **caractérisé en ce**
**que** l'extrémité distale (5) de la cheville de crampon (2) bute contre le fond (15) du trou borgne (3) de la pièce d'embase (1) et la partie d'usure protubérante (6) de la cheville de crampon (2) est disposée à l'extérieur du trou borgne (3) de la pièce d'embase (1).

16. Crampon antidérapant selon l'une des revendications 12 à 14, **caractérisé en ce**
**que** l'extrémité distale (5) de la cheville de crampon (2) est disposée à une distance par rapport au fond (15) du trou borgne (3) de la pièce d'embase (1) et la partie d'usure protubérante (6) de la cheville de crampon (2) est disposée à l'extérieur du trou borgne (3) de la pièce d'embase (1).

17. Crampon antidérapant selon l'une des revendications 12 à 16, **caractérisé en ce**
**que** la partie d'insertion (7) de la cheville de crampon (2) présente une forme qui diffère de la forme d'un corps de révolution, et
**que** la partie d'usure protubérante (6) de la cheville de crampon (2) présente une forme qui diffère de la forme d'un corps de révolution.

18. Crampon antidérapant selon l'une des revendications 12 à 17, **caractérisé en ce**
**que** la deuxième partie de support (17) du trou borgne (3) de la pièce d'embase (1) est munie d'une échancrure sous-jacente, et
**que** la première partie de support (16) de la partie d'insertion (7) de la cheville de crampon (2) est verrouillée dans l'échancrure sous-jacente dans le trou borgne (3) de la pièce d'embase (1).

19. Crampon antidérapant selon l'une des revendications 12 à 18, **caractérisé en ce que** le corps d'embase est muni d'une joue supérieure (13) et d'une joue inférieure (14).

20. Crampon antidérapant selon l'une des revendications 12 à 19, **caractérisé en ce**
**que** le matériau élastique est un matériau élastiquement déformable.
